# EUROPÄISCHE PATENTSCHRIFT

(11) **EP 2 146 881 B1**
(45) Veröffentlichungstag und Bekanntmachung des Hinweises auf die Patenterteilung: **02.12.2015**
(21) Anmeldenummer: 08759396.8
(22) Anmeldetag: 29.04.2008
(51) Int. Cl.: B60T 8/88, B60T 13/74

(54) **ELEKTROMECHANISCHES BREMSSYSTEM MIT EINER AUSFALLSICHEREN ENERGIEVERSORGUNG UND VERFAHREN ZUR AUSFALLSICHEREN ENERGIEVERSORGUNG IN EINEM ELEKTROMECHANISCHEN BREMSSYSTEM FÜR FAHRZEUGE**
ELECTROMECHANICAL BRAKE SYSTEM WITH A FAILSAFE ENERGY SUPPLY AND METHOD FOR FAILSAFE ENERGY SUPPLY IN AN ELECTROMECHANICAL BRAKE SYSTEM FOR VEHICLES
SYSTÈME DE FREINAGE ÉLECTROMÉCANIQUE MUNI D'UNE ALIMENTATION EN ÉNERGIE À SÉCURITÉ INTÉGRÉE ET PROCÉDÉ POUR ASSURER UNE ALIMENTATION EN ÉNERGIE À SÉCURITÉ INTÉGRÉE DANS UN SYSTÈME DE FREINAGE ÉLECTROMÉCANIQUE POUR

(30) Priorität: 07.05.2007 DE 102007021286
(43) Veröffentlichungstag der Anmeldung: 27.01.2010
(73) Patentinhaber: Continental Automotive GmbH, 30165 Hannover (DE)
(72) Erfinder: HOLZWARTH, Jörgen, 93049 Regensburg (DE)
(86) Internationale Anmeldenummer: PCT/EP2008/055276
(87) Internationale Veröffentlichungsnummer: WO 2008/135470

(56) Entgegenhaltungen:
- EP-A- 1 283 139
- WO-A-99/26821
- DE-A1- 19 826 131

## Beschreibung

Die Erfindung betrifft ein elektromechanisches Bremssystem mit einer ausfallsicheren Energieversorgung gemäß dem Oberbegriff des Patentanspruches 1 und ein Verfahren zur ausfallsicheren Energieversorgung in einem elektromechanischen Bremssystem für Fahrzeuge gemäß dem Oberbegriff des Patentanspruches 9.

Elektromechanische Bremssysteme, insbesondere für Kraftfahrzeuge sind bekannt, bei denen die zur Übertragung der Bremskraft auf die mit einem Rad verbundene Bremsscheibe vorgesehenen hydraulischen Bremsaktuatoreinheiten durch leistungsfähige elektromechanische Bremsaktuatoreinheiten ersetzt werden, welche über ein im Fahrzeug angeordnetes zentrales Steuersystem elektrisch steuer- und regelbar sind. Derartige elektromechanische Bremssysteme werden auch als "Brake-by-Wire"-Systeme bezeichnet. Eine derartige Bremsaktuatoreinheit kann als vollelektronische, elektro-hydraulische oder elektro-pneumatische Einheit ausgebildet sein.

Die Bremsaktuatoreinheit ist überlicherweise zusammen mit zumindest einem Steuergerät in einem Bremsmodul angeordnet, welches einem Rad des Fahrzeuges zugeordnet ist. Über das der Bremsaktuatoreinheit zugeordnete Steuergerät erfolgt eine Ansteuerung der Bremsaktuatoreinheit. Das Steuergerät erhält die zur Ansteuerung der Bremsaktuatoreinheit erforderlichen Steuerbefehle von dem zumindest einem zentral im Fahrzeug angeordneten Steuersystem, welches überlicherweise vier den jeweiligen Rädern zugeordnete Bremsmodule gemeinsam ansteuert.

Durch Betätigung eines im Fahrzeug vorgesehenen Betätigungselementes, beispielsweise eines Bremspedals wird zumindest ein elektronisches Bremssignal erzeugt, welches an das zentrale Steuersystem übertragen wird und abhängig davon eine Ansteuerung des jeweiligen Steuergerätes und somit der zugeordneten Bremsaktuatoreinheit vorgenommen wird.

Ein wichtiges Kritierium bei den beschriebenen elektromechanischen Bremssystemen ist die Erkennung, die Behebung und Beherrschung von im zentralen Steuersystem und/oder in den Bremsmodulen und/oder in der Energieversorgung der genannten Bauteile auftretenden Systemfehlern, welche die Verfügbarkeit des elektromechanischen Bremssystems und somit die Sicherheit der im Fahrzeug befindlichen Insassen gefährden können.

Häufig verfügen derartige elektromechanische Bremssysteme über Hilfsbremsfunktionen, über welche eine gesteuert abstufbare Betätigung (="secondary braking") einzelner unbeschädigter Bremsaktuatoreinheiten auch nach Auftreten eines Fehlers noch möglich ist. In bekannten Bremssystemen ist zusätzlich zu der Betätigung der Betriebsbremse ein Bremsen des Fahrzeuges mittels der Feststellbremse möglich, d.h. bei Ausfall eines der die Betriebsbremse betreffenden Bauteile ist weiterhin über das Betätigungselement der Feststellbremse ein "secondary braking" durchführbar.

Aus dem Stand der Technik sind bereits zahlreiche Konzepte zur Realisierung von "Ein-Fehler-Toleranten" elektromechanischen Bremssystemen bekannt. Beispielsweise beschreibt die WO 99/26820 ein elektromechanisches Bremssystem, dessen zentrale Steuereinheit drei Rechnereinheiten aufweist, deren Ausgangssignale mittels einer Votereinheit auf Ihre Plausibilität hin überprüft werden. Weicht das Steuersignal einer der Rechnereinheiten von den durch die weiteren Rechnereinheiten erzeugten Steuersignalen ab, so wird dieses mittels der Votereinheit als fehlerhaft identifiziert und die fehlerbehaftete Rechnereinheit von der weiteren Signalverarbeitung ausgeschlossen. Hierdurch soll eine Ansteuerung der Bremsmodule mittels fehlerbehafteter Steuersignale verhindert werden. Tritt nun ein zweiter Fehler beispielsweise in Form des Ausfalls der Votereinheit auf, so ist keine weitere zuverlässige Betätigung des Bremssystems mehr möglich, d.h. bereits ein weiterer zweiter Fehler kann zum Ausfall des gesamten elektromechanischen Bremssystems führen.

Insbesondere bei hydraulischen Bremssystemen ist es bereits bekannt, zur Erhöhung der Fehlertoleranz eine Aufteilung der Bremskreise innerhalb des Fahrzeuges vorzunehmen. Analog hierzu kann der Bremskreis des elektromechanischen Bremssystems in zumindest zwei Bremskreise aufgegliedert werden, d.h. jeweils zwei unterschiedlichen Rädern zugeordnete Bremsmodule werden zu einer funktionalen Einheit zusammengefasst und gemeinsam angesteuert. Beispielsweise können die den diagonal gegenüber liegenden Rädern zugeordneten Bremsmodule jeweils eine funktionale Einheit bilden. Bei Ausfall einer der genannten funktionalen Einheiten kann weiterhin über die Bremsaktuatoreinheiten der funktionstüchtigen funktionalen Einheit gebremst werden, d.h. ein "secondary braking" durch Betätigung eines der zwei Bremskreise der Betriebsbremse ist gewährleistet.

Zur Versorgung der einzelnen Steuergeräte und Bremsaktuatoreinheiten der Bremsmodule des elektromechanischen Bremssystems mit elektrischer Energie, insbesondere der erforderlichen Betriebsspannung bzw. -stromstärke sind diese jeweils beispielsweise über separate Energieversorgungsleitungen an eine Haupt-Energieversorgungseinheit angeschlossen. Zusätzlich zur Haupt-Energieversorgungseinheit ist in bekannten Systemen zumindest eine Not-Energieversorgungseinheit vorgesehen, über welche ein Ausfall der Haupt-Energieversorgungseinheit aufgefangen wird, und zwar, wird im Fehlerfalle die Energieversorgung zumindest der sicherheitsrelevanten Elemente des elektromechanischen Bremssystems durch die Not-Energieversorgungseinheit übernommen.

Durch Abschalten der Energiezufuhr ist darüber hinaus auch ein Abschalten eines fehlerbehafteten Bremsmoduls innerhalb des elektromechanischen Bremssystems möglich, und zwar wird hierzu die Energieversorgung der Bremsaktuatoreinheit oder des zugehörigen Steuergerätes unterbrochen. Das strom- bzw. spannungslos geschaltete Bremsmodul öffnet im Anschluss daran selbsttätig. Insbesondere bei Auftreten eines zweiten Fehlers kann eine fehlerhafte Betätigung eines Bremsmoduls erfolgen, wodurch eine unerwünschte Bremskraft erzeugt wird. In diesem Fall ist ein gesteuertes Öffnen der Betriebsbremse über das zugeordnete Steuergerät nicht mehr möglich, d.h. die Betriebsbremse bremst unerwartet oder blockiert, wodurch die Fahrstabilität des Fahrzeugs gefährdet ist. Durch ein gezieltes Abschalten der Energiezufuhr können derartige Fehler auch bei Auftreten beispielsweise eines ersten und zweiten Systemfehlers innerhalb des dem einzelnen Rad zugeordneten Steuergerätes behoben werden. Die verbleibenden funktionstüchtigen Bremsmodule stehen vorteilhaft für ein "secondary braking" und somit einem kontrollierten Abbremsen des Fahrzeuges zur Verfügung.

Bei herkömmlichen elektromechanischen Bremssystemen sind jeweils zwei unabhängige Energieversorgungsleitungen pro Bremsmodul zur Versorgung der Bremsaktuatoreinheit und des Steuergerätes vorgesehen. Somit stehen zwei unabhängige Schaltpfade zum Abschalten der Energiezufuhr jeweils eines Bremsmoduls zur Verfügung. Für das gesamte elektromechanische Bremssystem sind somit beispielsweise zur Realisierung einer "Zwei-Fehler-Toleranz" acht Stromversorgungsleitungen mittels beispielsweise acht Votereinheiten zu überwachen, d.h. pro Versorgungsleitung ist eine Votereinheit vorzusehen. Hierdurch ergibt sich ein hoher Steuerungs- und/oder Bauteileaufwand.

Aus der DE 198 26 131 A1 ist ein elektromechanisches Bremssystem mit vier Bremsmodulen bekannt, welche jeweils ein Steuergerät und eine Bremsaktuatoreinheit umfassen, wobei das Steuergerät und die Bremsaktuatoreinheit eines Bremsmoduls jeweils über getrennt voneinander geführte Energieversorgungsleitungen mit einer erste Energiequelle verbunden sind. Eine Erhöhung der Funktionstüchtigkeit des Bremssystems wird dadurch erreicht, dass eine zweite Energiequelle verwendet wird, welche wie die erste Energiequelle mit allen Bremsmodulen verbunden ist. Bei einem Ausfall beider Energiequellen wird keines der Bremsmodule mit Energie versorgt.

Ausgehend vom beschriebenen Stand der Technik liegt der Erfindung die Aufgabe zugrunde, ein elektromechanisches Bremssystem mit einer ausfallsicheren Energieversorgung und ein zugehöriges Verfahren zur ausfallsicheren Energieverteilung in einem elektromechanischen Bremssystem anzugeben, welches nach Auftreten sowohl eines ersten als auch eines zweiten Systemfehlers weiterhin eine Energieversorgung zumindest zweier funktionstüchtiger Bremsmodule sicherstellt. Zusätzlich ist eine Abschaltung von aufgrund der aufgetretenen Systemfehler unerwünscht bremsenden Bremsmodulen durch Abtrennung dessen Energiezufuhr gewährleistet.

Die Aufgabe wird erfindungsgemäß durch ein elektromechanisches Bremssystem gemäß Anspruch 1 und ein Verfahren zur ausfallsicheren Energieverteilung in einem elektromechanischen Bremssystem gemäß Anspruch 9 gelöst. Vorteilhafte Weiterbildungen der Erfindung sind den weiteren abhängigen Patentansprüchen zu entnehmen.

Der wesentliche Aspekt des erfindungsgemäßen elektromechanischen Bremssystems ist darin zu sehen, dass zur zusätzlichen Versorgung der Bremsmodule mit elektrischer Energie eine erste Not-Energieversorgungseinheit an das Steuergerät und an die Bremsaktuatoreinheit des ersten und vierten Bremsmoduls und eine zweite Not-Energieversorgungseinheit an das Steuergerät und an die Bremsaktuatoreinheit des zweiten und dritten Bremsmoduls über jeweils zusätzliche, getrennt voneinander geführte Energieversorgungsleitungen angeschlossen sind, wobei die Auswahl der zur Energieversorgung der Bremsmodule vorgesehenen Energieversorgungseinheiten über Schaltmittel erfolgt, die zumindest teilweise getrennt voneinander über zumindest ein zentrales Steuersystem ansteuerbar sind. Durch die vorteilhafte Zuordnung von jeweils zwei Bremsmodulen zu einer Not-Energieversorgungseinheit einerseits und die Bereitstellung von zentral steuerbaren Schaltmitteln andererseits ermöglicht die erfindungsgemäße Schaltstruktur ein sicheres Öffnen eines ungewollt bremsenden Bremsenmoduls durch Abschalten dessen elektrischen Energieversorgung auch nach Auftreten eines zweiten Fehlers ("2-Fehler-Toleranz"). Hierzu ist es ausreichend zumindest der Bremsaktuatoreinheit oder dem Steuergerät des fehlerbehafteten Bremsmoduls keine elektrische Energie mehr zuzuführen, d.h. das Bremsmodul strom- bzw. spannungslos zu schalten, wodurch die Bremsaktuatoreinheit automatisch geöffnet wird. Weiterhin vorteilhaft stehen bei der erfindungsgemäßen Schaltstruktur selbst nach Auftreten von zwei Fehlern in der Energieversorgung des elektromechanischen Bremsensystems weiterhin mindestens zwei Bremsaktuatoreinheiten beispielsweise für ein "secondary braking" zur Verfügung.

Weiterhin sind zur Steuerung der Verteilung der elektrischen Energie an das jeweilige Steuergerät und die jeweilige Bremsaktuatoreinheit zumindest eine erste und zweite Votereinheit vorgesehen, welche zur Steuerung der zum Durchschalten der Energieversorgungsleitungen vorgesehene erste bis achte Schaltmittel und der zusätzlichen Energieversorgungsleitungen über zusätzliche erste bis achte Schaltmittel vorgesehen sind, die jeweils getrennt voneinander schaltbar sind.

Vorteilhafterweise ist die erste Votereinheit hierbei zur Steuerung der ersten bis achten Schaltmittel und die zweite Votereinheit zur Steuerung der zusätzlichen ersten bis achten Schaltmittel vorgesehen.

Beispielsweise kann ein Schaltmittel durch ein steuerbares Schaltelement oder einer Serienschaltung aus zwei steuerbaren Schaltelementen oder einer Serienschaltung aus einem steuerbaren Schaltelement und einem Diodenelement gebildet sein.

Besonders vorteilhaft weisen die Schaltmittel im strom- bzw. spannungslosen Zustand einen vorgegebenen Schaltzustand auf, der abhängig von der jeweils vorliegenden Schaltstruktur, insbesondere der Anzahl der vorgesehen Votereinheiten unterschiedlich gewählt wird. Dieser Schaltzustand nimmt beim Ausfall der steuernden Einheit vorteilhafterweise einen für die Führung des Fahrzeuges sicheren Zustand ab. Dieser Schaltzustand kann ohne Ansteuerung, d.h. sozusagen "per default" abhängig von der Schaltstruktur entweder ein Bremsmodul mit einer speziellen gewählten Energiequelle verbinden oder dieses Bremsmodul von einer speziell gewählten Energiequelle trennen.

Gemäß einer vorteilhaften Variante der Erfindung ist die Zuordnung der Energieversorgungseinheiten zu den Bremsmodulen derart gewählt, dass eine diagonale, seitenweise, achsweise oder radweise Bremskreisaufteilung entsteht.

Insbesondere bei Verwendung von zwei Votereinheiten ist die Energieversorgung der ersten oder zweiten Votereinheit über weitere Schaltmittel abschaltbar, wobei die Schaltmittel über zumindest eine im zentralen Steuersystem vorgesehen Steuereinheit steuerbar sind. Die zumindest eine Steuereinheit ist hierzu zur Auswertung der an den Bremsaktuatoreinheiten anliegenden Spannungen und/oder Ströme eingerichtet, wobei abhängig vom Auswerteergebnis die Energieversorgung der ersten oder zweiten Votereinheit über die weiteren Schaltmittel abgeschaltet wird.

Gemäß dem Verfahren zur ausfallsicheren Energieverteilung in einem elektromechanischen Bremssystem für Fahrzeuge wird ferner besonders vorteilhaft über das zumindest eine zentrale Steuersystem das Auftreten eines ersten und eines zweiten Systemfehlers erfasst und die Energieverteilung im elektromechanischen Bremssystem derart über das zumindest eine zentrale Steuersystem gesteuert, dass zumindest zwei Bremsmodule nach Auftreten eines ersten und eines zweiten Systemfehlers weiterhin zum Bremsen der Fahrzeuges verfügbar sind und zumindest eines der verbleibenden durch den ersten und/oder zweiten Systemfehler betroffenen Bremsmodule abgeschaltet wird.

Die Erfindung wird im Folgenden an einem Ausführungsbeispiel anhand von Figuren näher beschrieben. Es zeigen:
- Fig. 1: beispielhaft in einem schematischen Blockschaltbild ein in einem Fahrzeug integriertes elektromechanisches Bremssystem,
- Fig. 2: beispielhaft eine zur Energieversorgung des elektromechanischen Bremssystems vorgesehene Schaltungsstruktur mit zwei Votereinheiten,
- Fig. 3: beispielhaft eine zur Energieversorgung des elektromechanischen Bremssystems vorgesehene Schaltungsstruktur mit drei Votereinheiten,
- Fig. 4: beispielhaft eine zur Energieversorgung des elektromechanischen Bremssystems vorgesehene Schaltungsstruktur mit vier Votereinheiten, und
- Fig. 5: beispielhaft einen in den Figuren 2 bis 3 nicht dargestellten Abschnitt der Schaltstruktur zur Erfassung der an den Bremsmodulen anliegenden Spannung und/oder Ströme.

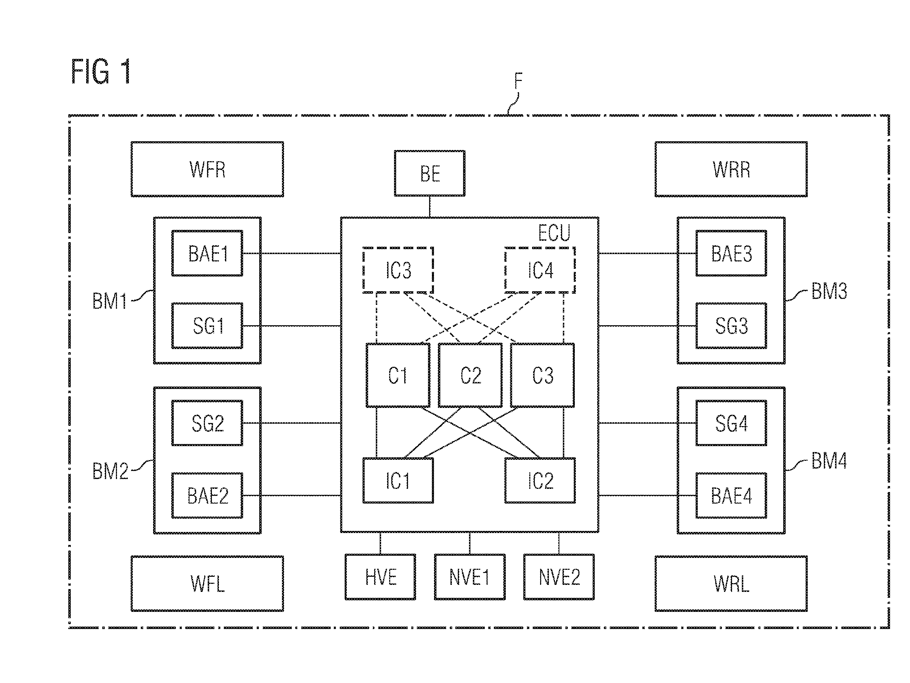

In Fig. 1 ist beispielhaft in einem schematischen Blockschaltbild ein in einem Fahrzeug F integriertes elektromechanisches Bremssystem dargestellt, welches zum Bremsen zumindest eines rechten und linken Vorderrades WFR, WFL und eines rechten und linken Hinterrades WRR, WRL vorgesehen ist.

Das elektromechanische Bremssystem weist im vorliegenden Ausführungsbeispiel zumindest ein zentrales Steuersystem ECU und ein erstes bis viertes Bremsmodul BM1 bis BM4 auf. Beispielsweise ist das erste Bremsmodul BM1 dem rechten Vorderrad WFR, das zweite Bremsmodul BM2 dem linken Vorderrad WFL, das dritte Bremsmodul BM3 dem rechten Hinterrad WRR und das vierte Bremsmodul BM4 dem linken Hinterrad WRL zugeordnet sind.

Das elektromechanische Bremssystem bildet beispielsweise das Betriebsbremssystem des Fahrzeuges F aus, zu dessen Betätigung im Fahrzeug F zumindest ein Betätigungselement BE vorgesehen ist. Das Betätigungselement BE kann beispielsweise durch ein Bremspedal gebildet sein, welches hierzu mit dem zentralen Steuersystem ECU des elektromechanischen Bremssystems verbunden ist. Ferner kann im Fahrzeug F zumindest ein weiteres elektromechanisches Bremssystem, beispielsweise ein elektronisches Parkbremssystem (nicht in den Figuren dargestellt) vorgesehen sein, zu dessen Betätigung weitere Betätigungselemente und ggf. eine zusätzliche Steueranordnung im Fahrzeug bereitgestellt werden.

Das zumindest eine zentrale Steuersystem ECU weist im betrachteten Ausführungsbeispiel zumindest eine erste, zweite und dritte Steuereinheit C1, C2, C3 und zumindest zwei Votereinheiten IC1, IC2 ("2-Voter-Konzept"), und zwar eine erste und zweite Votereinheit IC1, IC2 auf, wobei jeweils eine der Votereinheiten IC1, IC2 mit einer der Steuereinheiten C1, C2, C3 verbunden ist, d.h. die erste und zweite Votereinheit IC1, IC2 sind unter anderem zur Überwachung des fehlerfreien Betriebes der ersten bis dritten Steuereinheit C1, C2, C3 jeweils einzeln an diese angeschlossen. Die Steuereinheiten C1 - C3 werden in einer bevorzugten Ausführungsform als Mikrocontrollereinheiten ausgebildet.

Im vorliegenden Ausführungsfall ist somit die Ansteuerung des ersten bis vierten Bremsmoduls BM1 - BM4 des elektromechanischen Bremssystems dreifach redundant ausgelegt, d.h. bei einem fehlerhaften Betrieb einer der ersten bis dritten Steuereinheit C1 - C3 wird die fehlerbehaftete Steuereinheit durch zumindest eine der beiden Votereinheit IC1, IC2 erkannt und von der Signalverarbeitung zur Steuerung des elektromechanischen Bremssystems ausgeschlossen. Durch die zumindest zwei Votereinheiten IC1, IC2 werden hierzu eine oder mehrere geeignete Prüffunktionen wie beispielsweise der Vergleich der Ausgangssignale der ersten bis dritten Steuereinheit C1 - C3 durchgeführt.

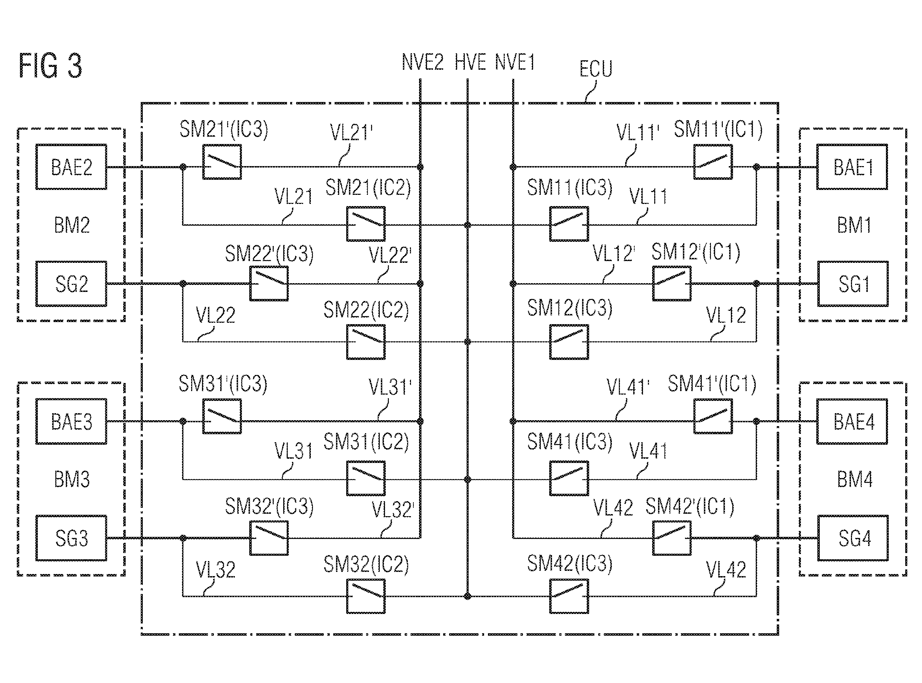

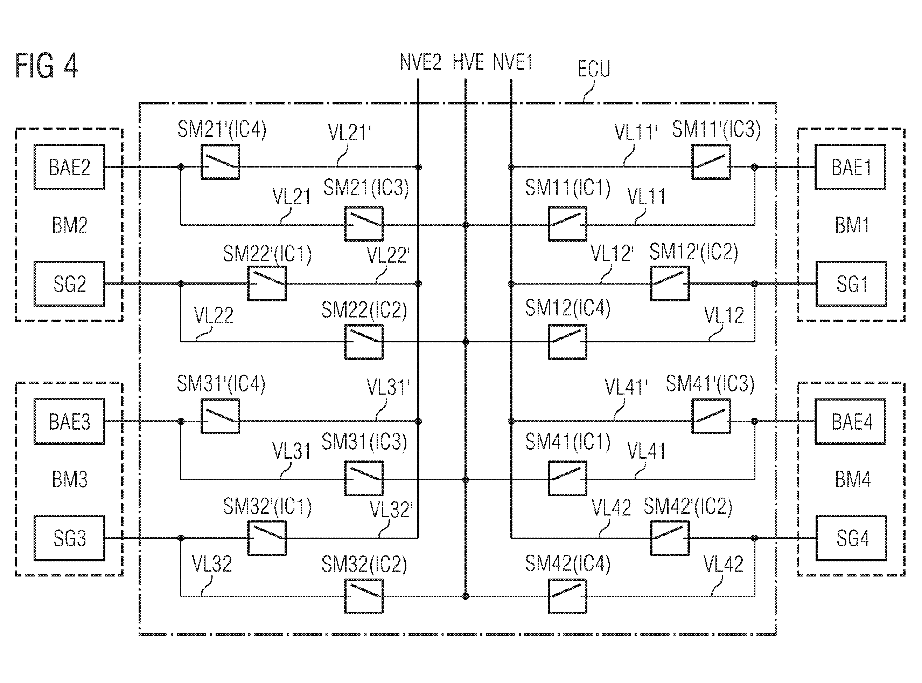

Im vorliegenden Ausführungsbeispiel sind zur Erhöhung der Fehlertoleranz des elektromechanischen Bremssystems zumindest eine erste und zweite Votereinheit IC1, IC2 vorgesehen, so dass bei einem Ausfall einer der Votereinheiten IC1, IC2 mittels eine funktionsfähige Votereinheit zur Überwachung der ersten bis dritten Steuereinheit C1 - C3 verbleibt. Zur weiteren Erhöhung der Fehlertoleranz können in einer alternativen Ausführungsform gemäß Figur 3 beispielsweise eine erste bis dritte Votereinheit IC1, IC2, IC3 oder gemäß Figur 4 eine erste bis vierte Votereinheit IC1, IC2, IC3, IC4 vorgesehen sein. Hierdurch wird die Fehleranfälligkeit und Zuverlässigkeit des elektromechanischen Bremssystems nochmals erheblich verbessert. Die Votereinheiten IC1, IC2, IC3, IC4 können hierbei als "Hardware-Votereinheiten" oder als "Software-Votereinheiten" ausgebildet sein. Insbesondere bei der Ausbildung als "Software-Votereinheiten" können diese in im elektromechanischen Bremssystems bereits vorgesehene Steuereinheiten, beispielsweise die erste bis dritte Steuereinheiten C1 - C3 integriert sein.

Das erste bis vierte Bremsenmodul BM1 bis BM4 weisen jeweils eine Bremsaktuatoreinheit BAE1 bis BAE4 und ein Steuergerät SG1 bis SG4 auf. Insbesondere ist in dem ersten Bremsmodul BM1 eine erste Bremsaktuatoreinheit BAE1 und ein erstes Steuergerät SG1, in dem zweiten Bremsmodul BM2 eine zweite Bremsaktuatoreinheit BAE2 und ein zweites Steuergerät SG2, in dem dritte Bremsmodul BM3 eine dritte Bremsaktuatoreinheit BAE3 und ein drittes Steuergerät SG3 sowie in dem vierten Bremsmodul BM4 eine vierte Bremsaktuatoreinheit BAE4 und ein viertes Steuergerät SG4 vorgesehen, wobei das erste bis vierte Steuergerät SG1 bis SG4 jeweils mit der zugeordneten ersten bis vierten Bremsaktuatoreinheit BAE1 bis BAE4 verbunden ist.

Das elektromechanische Bremssystem ist zur Versorgung des ersten bis vierten Bremsmoduls BM1 bis BM4 bzw. der ersten bis vierten Bremsaktuatoreinheit BAE1 bis BAE4 und des ersten bis vierten Steuergerätes SG1 bis SG4 mit elektrischer Energie mit zumindest einer Haupt-Energieversorgungseinheit HEV, beispielsweise der Fahrzeugbatterie und zumindest einer ersten und zweiten Not-Energieversorgungseinheit NEV1, NEV2 verbunden. Die erste und zweite Not-Energieversorgungseinheit NEV1, NEV2 können beispielsweise durch zusätzliche im Fahrzeug F vorgesehene Batterieeinheiten gebildet sein.

Die genannten Energieversorgungseinheiten HEV, NEV1, NEV2 sind beispielsweise an das zentrale Steuersystem ECU angeschlossen, welches die Verteilung der von der Haupt-Energieversorgungseinheit HEV und der zumindest ersten und zweiten Not-Energieversorgungseinheit NEV1, NEV2 bereitgestellten elektrischen Energie innerhalb des elektromechanischen Bremsensystems regelt.

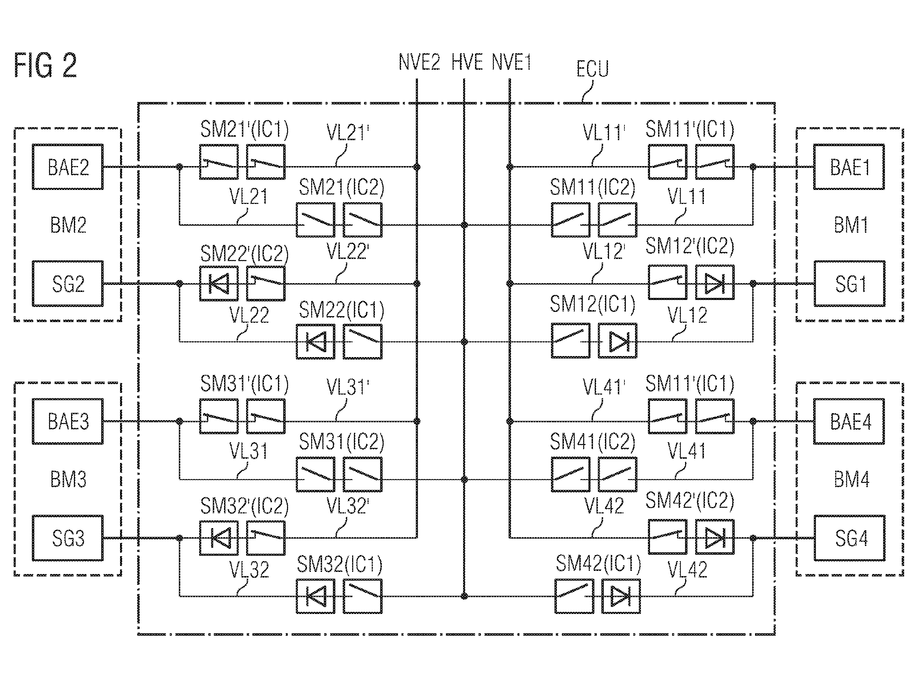

Hierzu sind beispielsweise gemäß Figur 2 das erste bis vierte Steuergerät SG1 - SG4 und die erste bis vierte Bremsaktuatoreinheit BAE1 - BAE4 über voneinander getrennt geführte erste bis achte Energieversorgungsleitungen VL11, VL12, VL21, VL22, VL31, VL32, VL41, VL42 jeweils mit der Haupt-Energieversorgungseinheit HVE verbunden, und zwar vorzugsweise über das zentrale Steuersystem ECU. Die erste bis achte Energieversorgungsleitungen VL11, VL12, VL21, VL22, VL31, VL32, VL41, VL42 weisen erste bis achte Schaltmittel SM11, SM12, SM21, SM22, SM31, SM32, SM41, SM42 auf, welche über das zentrale Steuersystem ECU, insbesondere die dort angeordneten erste und zweite Votereinheit IC1, IC2 schaltbar sind.

Zur zusätzlichen Versorgung des ersten bis vierten Bremsmoduls BM1 - BM4 bzw. dessen erstes bis viertes Steuergerätes SG1 - SG4 und dessen ersten bis vierten Bremsaktuatoreinheit BAE1 - BAE4 mit elektrischer Energie ist beispielsweise die erste Not-Energieversorgungseinheit NVE1 an das erste und vierte Steuergerät SG1, SG4 und an die erste und vierte Bremsaktuatoreinheit BAE1, BAE4 des ersten und vierten Bremsmoduls BM1, BM4 und die zweite Not-Energieversorgungseinheit NVE2 an das zweite und dritte Steuergerät SG2, SG3 und an die zweite und dritte Bremsaktuatoreinheit BAE2, BAE3 des zweiten und dritten Bremsmoduls BM2, BM3 über jeweils getrennt voneinander geführte erste bis achte zusätzliche Energieversorgungsleitungen VL11', VL12', VL21', VL22', VL31', VL32', VL41', VL4' angeschlossen, d.h. bei Ausfall der Haupt-Energieversorgungseinheit HVE ist eine Notversorgung zumindest zweier Bremsmodule BM1 - BM4 über die erste und/oder zweite Not-Energieversorgungseinheit NEV1, NEV2 gewährleistet. Vorteilhafterweise werden somit jeder Not-Energieversorgungseinheit NEV1, NEV2 jeweils zwei Bremsmodule BM1 - BM4 zugeordnet, wodurch der Verkabelungsaufwand und die Komplexität deutlich reduziert werden kann, und zwar ist hierdurch kein Anschluss jedes Bremsmodule BM1 - BM4 an die erste und zweite Not-Energieversorgungseinheit NEV1, NEV2 erforderlich.

Durch die beschrieben Schaltstruktur wird beispielsweise ein diagonales Bremskreiskonzept vorgegeben, d.h. das erste und vierte, diagonal gegenüber im Fahrzeug F angeordnete Bremsmodul BM1, BM4 werden an die erste Not-Energieversorgungseinheit NVE1 und das zweite und dritte, ebenfalls diagonal gegenüber im Fahrzeug F angeordnete Bremsmodul BM2, BM3 werden an die zweite Not-Energieversorgungseinheit NVE2 angeschlossen. Die beschrieben Schaltstruktur ist beispielhaft gewählt. Es versteht sich das zahlreiche weitere Bremskreisaufteilungen möglich sind, wie beispielsweise eine seitenweise, achsweise oder radweise Aufteilung.

Die Auswahl der zur Energieversorgung der ersten bis vierten Bremsmodule BM1 - BM4 vorgesehenen Energieversorgungseinheit HVE, NVE1, NVE2 erfolgt über Schaltmittel SM11 - SM42, SM11' - SM42', die zumindest teilweise getrennt voneinander über das zentrale Steuersystem ECU ansteuerbar sind. Im Ausführungsbeispiel gemäß Figur 2 werden beispielsweise jeweils 8 der insgesamt 16 Schaltmittel SM11 - SM42, SM11' - SM42' über eine der beiden Votereinheiten IC1, IC2 angesteuert. Durch Erhöhung der Anzahl der Votereinheiten gemäß der Figuren 3 und 4 wird die Unabhängigkeit der zur Energieversorgung verfügbarer Schaltpfade erhöht.

Die in den Figuren dargestellten Energieversorgungsleitungen VL11 - VL42, VL11' - VL42' ("Schalt- bzw. Versorgungspfade") können auch durch Leitungen eines Bussystems gebildet sein und/oder über weitere im Fahrzeug F vorgesehene, nicht in den Figuren dargestellte Steuergeräte geführt sein.

Bei der in Figur 2 dargestellten Schaltstruktur werden über die zumindest zwei Votereinheiten IC1, IC2 die Schaltmittel SM11 - SM42, SM11' - SM42' angesteuert bzw. geschaltet und somit die Verteilung der durch die genannten Energieversorgungseinheiten HEV, NEV1, NEV2 bereitgestellten elektrischen Energie gesteuert. Hierbei werden jeweils die beiden eine Bremsaktuatoreinheit BAE1 - BAE4 bzw. ein Steuergerät SG1 - SG4 mit der jeweiligen Energieversorgungseinheit HVE, NVE1, NVE2 verbindenden Energieversorgungsleitungen VL11 - VL42, VL11' - VL42' sowie die zum Durchschalten dieser vorgesehenen Schaltmittel SM11 - SM42, SM11' - SM42' getrennt voneinander durch eine der beiden Votereinheiten IC1, IC2 gesteuert, so dass selbst bei Ausfall einer der Votereinheiten IC1, IC2 zumindest ein betriebsbereiter Versorgungspfad pro Bremsaktuatoreinheit BAE1 - BAE4 bzw. pro Steuergerät SG1 - SG4 zur Verfügung steht, welcher durch Betätigung der zugeordneten Schaltmittel SM11 - SM42, SM11' - SM42' über die verbleibende Votereinheiten IC1, IC2 geöffnet oder geschlossen werden kann.

In einer bevorzugten Ausführungsform weisen die den zusätzlichen Energieversorgungsleitungen VL11' - VL42' zugeordneten Schaltmittel SM11' - SM42' im strom- bzw. spannungslosen Zustand einen vorgegebenen Schaltzustand auf, d.h. sind entweder offen oder geschlossen ausgebildet. Der vorgegebenen Schaltzustand ist hierbei abhängig von der jeweils vorliegenden Schaltstruktur, insbesondere Anzahl der im zentralen Steuersystem ECU vorgesehen Votereinheiten IC1 - IC4 unterschiedlich gewählt. Werden beispielsweise eine erste und zweite Votereinheit IC1, IC2 vorgesehen, so sind die Schaltmittel SM11' - SM42' im strom- bzw. spannungslosen Zustand standardmäßig geschlossen, wohingegen bei einer eine erste bis dritte Votereinheit IC1 - IC3 aufweisenden Implementierung diese standardmäßig geöffnet sind.

Insgesamt stehen somit 16 schaltbare Versorgungspfade (16 Energieversorgungsleitungen VL11 - VL42, VL11' - VL42' sowie 16 Schaltmittel SM11 - SM42, SM11' - SM42') zur Zuführung der elektrischen Energie an das erste bis vierte Bremsmodul BM1 - BM4 zur Verfügung. Im Einzelnen ist beispielsweise gemäß Figur 2 die erste Bremsaktuatoreinheit BAE1 über erste Schaltmittel SM11 und die erste Energieversorgungsleitung VL11 mit der Haupt-Energieversorgungseinheit HVE und über zusätzliche erste Schaltmittel SM11' und die erste zusätzliche Energieversorgungsleitung VL11' mit der ersten Not-Energieversorgungseinheit NEV1 verbunden. Die ersten Schaltmittel SM11 werden mittels der zweiten Votereinheit IC2 und die zusätzlichen ersten Schaltmittel SM11' mittels der ersten Votereinheit IC1 gesteuert.

Das erste Steuergerät SG1 ist über zweite Schaltmittel SM12 und die zweite Energieversorgungsleitung VL12 an die Haupt-Energieversorgungseinheit HVE und über zusätzliche zweite Schaltmittel SM12' und die zweite zusätzliche Energieversorgungsleitung VL12' an die erste Not-Energieversorgungseinheit NEV1 angeschlossen, wobei die Ansteuerung der zweiten Schaltmittel SM12 mittels der ersten Votereinheit IC1 und die der zusätzlichen zweiten Schaltmittel SM12' mittels der zweiten Votereinheit IC2 erfolgt.

Zum Anschluss der zweiten Bremsaktuatoreinheit BAE2 an die Haupt-Energieversorgungseinheit HVE sind dritte Schaltmittel SM21 und dritte Energieversorgungsleitung VL21 und zum Anschluss an die zweite Not-Energieversorgungseinheit NEV2 zusätzliche dritte Schaltmittel SM21' und eine zusätzliche dritte Energieversorgungsleitung VL21' vorgesehen, wobei die dritten Schaltmittel SM21 mittels der zweiten Votereinheit IC2 und die zusätzlichen dritten Schaltmittel SM21' mittels der ersten Votereinheit IC1 schaltbar sind.

Ferner ist das zweite Steuergerät SG2 über vierte Schaltmittel SM22 und die vierte Energieversorgungsleitung VL22 an die Haupt-Energieversorgungseinheit HVE und über zusätzliche vierte Schaltmittel SM22' und eine vierte zusätzliche Energieversorgungsleitung VL22' an die zweite Not-Energieversorgungseinheit NEV2 angeschlossen, wobei die Ansteuerung der vierten Schaltmittel SM22 mittels der ersten Votereinheit IC1 und die der zusätzlichen vierten Schaltmittel SM22' mittels der zweiten Votereinheit IC2 erfolgt.

Die dritte Bremsaktuatoreinheit BAE3 ist über fünfte Schaltmittel SM31 und die fünfte Energieversorgungsleitung VL31 mit der Haupt-Energieversorgungseinheit HVE und über zusätzliche fünfte Schaltmittel SM31' und eine fünfte zusätzliche Energieversorgungsleitung VL31' mit der zweiten Not-Energieversorgungseinheit NEV2 verbunden. Die fünften Schaltmittel SM31 werden hierbei über die zweite Votereinheit IC2 und die zusätzlichen fünften Schaltmittel SM31' über die erste Votereinheit IC1 gesteuert.

Das dritte Steuergerät SG3 ist über sechste Schaltmittel SM32 und die sechste Energieversorgungsleitung VL32 an die Haupt-Energieversorgungseinheit HVE und über zusätzliche sechste Schaltmittel SM32' und eine zusätzliche sechste Energieversorgungsleitung VL32' an die zweite Not-Energieversorgungseinheit NEV2 angeschlossen, wobei die Ansteuerung der sechsten Schaltmittel SM32 durch die erste Votereinheit IC1 und die der zusätzlichen sechsten Schaltmittel SM32' durch die zweite Votereinheit IC2 erfolgt.

Schließlich ist die vierte Bremsaktuatoreinheit BAE4 über siebte Schaltmittel SM41 und die siebte Energieversorgungsleitung VL41 mit der Haupt-Energieversorgungseinheit HVE und über zusätzliche siebte Schaltmittel SM41' und eine zusätzliche siebte Energieversorgungsleitung VL41' mit der ersten Not-Energieversorgungseinheit NEV1 verbunden. Die siebten Schaltmittel SM41 werden hierbei über die zweite Votereinheit IC2 und die zusätzlichen siebten Schaltmittel SM41' über die erste Votereinheit IC1 gesteuert.

Weiterhin ist das vierte Steuergerät SG4 über achte Schaltmittel SM42 und die achte Energieversorgungsleitung VL42 an die Haupt-Energieversorgungseinheit HVE und über zusätzliche achte Schaltmittel SM42' und eine zusätzliche achte Energieversorgungsleitung VL42' an die zweite Not-Energieversorgungseinheit NEV2 angeschlossen. Die Ansteuerung der achten Schaltmittel SM42 erfolgt über die erste Votereinheit IC1 und die der zusätzlichen achten Schaltmittel SM42' über die zweite Votereinheit IC2.

Bei dem in Figur 2 dargestellten Ausführungsbeispiel mit einer ersten und zweiten Votereinheit IC1, IC2 sind die zusätzlichen Schaltmittel SM11' - SM42' derart ausgelegt, dass diese bei einem Ausfall der ersten oder zweiten Votereinheit IC1, IC2, d.h. im stromlosen Zustand, geschlossen sind. Ferner sind die zur Zuführung von elektrischer Energie an die Bremsaktuatoreinheiten BAE1 - BAE4 vorgesehenen Schaltmittel SM11, SM11', SM21, SM21', SM31, SM31', SM41, SM41' jeweils beispielsweise durch zwei in Serie geschaltete Schaltelemente gebildet, wohingegen die zur Zuführung von elektrischer Energie an die Steuergeräte SG1 - SG4 vorgesehenen Schaltmittel SM12, SM12', SM22, SM22', SM32, SM32', SM42, SM42' jeweils beispielsweise ein ebenfalls in Serie geschaltetes Schalt- und Diodenelement aufweisen.

Im Normalfall, d.h. "Nicht-Fehler-Fall" erfolgt die Versorgung der Bremsmodule BM1 - BM4 mit elektrischer Energie über die Haupt-Energieversorgungseinheit HVE, d.h. die ersten bis achten Schaltmittel SM11 - SM42 sind zur Übertragung von elektrischer Energie über die erste bis achte Energieversorgungsleitung VL11 - VL42 geschlossen und die zusätzlichen ersten bis acht Schaltmittel SM11' - SM42' zur Durchschaltung der zusätzlichen ersten bis achten Energieversorgungsleitungen VL11' - VL42' offen.

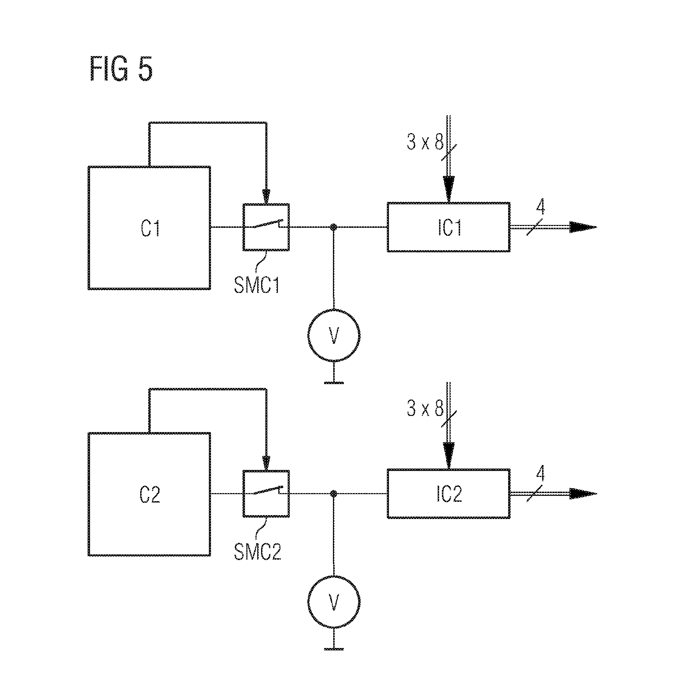

Um im Fehlerfall die von der ersten und/oder zweiten Votereinheit IC1, IC2 gesteuerten Schaltmittel SM11 - SM42, SM11' - SM42' stromlos schalten zu können und hierdurch abhängig vom vorgegebenen Schaltzustand der Schaltmittel SM11 - SM42, SM11' - SM42' ein Öffnen oder Schließen der betroffenen Schaltmittel SM11 - SM42, SM11' - SM42' zu bewirken, ist die Energieversorgung der ersten oder zweiten Votereinheit IC1, IC2 über weitere Schaltmittel SMC1, SMC2 abschaltbar, und zwar beispielsweise gesteuert über zumindest eine der Steuereinheiten C1, C2, C3. In Figur 5 ist beispielsweise in einem schematischen Blockschaltbild ein entsprechender Ausschnitt der Schaltungsstruktur dargestellt.

Die vorzugsweise als Mikrokontroller ausgebildeten Steuereinheiten C1 und C2 weisen überlicherweise Spannungsreglereinheiten auf, über welche die an den Bremsaktuatoreinheiten BAE1 - BAE4 anliegende Spannungen und/oder Ströme ausgewertet werden können. Die erste Steuereinheit C1 ist über ein erstes weiteres Schaltmittel SMC1 und die zweite Steuereinheit C2 über ein zweites weiteres Schaltmittel SMC2 mit der ersten bzw. zweiten Votereinheit IC1, IC2 verbunden. Wird beispielsweise durch zumindest eine der Steuereinheiten C1, C2 eine Fehlfunktion einer der Bremsaktuatoreinheiten BAE1 - BAE4 erfasst, kann die betroffene Votereinheit IC1, IC2 durch Öffnen des der abzuschaltenden Votereinheit IC1, IC2 zugeordneten Schaltmittels SMC1, SMC2 stromlos geschaltet werden und somit die der abgeschalteten Votereinheit IC1, IC2 zugeordneten Schaltmittel SM11 - SM42, SM11' - SM42' in den jeweils vorgegebenen Schaltzustand geschaltet werden, beispielsweise gemäß Figur 2 geschlossen werden. Hierdurch ergeben sich zumindest zwei weitere Schaltpfade zur Abschaltung eines fehlerbehafteten Bremsmoduls BM1 - BM4.

Unterschiedlich zu der in Figur 2 dargestellten Schaltungsanordnung sind in Figur 3 zumindest eine erste bis dritte Votereinheit IC1, IC2, IC3 ("3-Voter-Konzept") zur Steuerung der Schaltmittel SM11 - SM42, SM11' - SM42' vorgesehen. Zur Steuerung der Energieversorgung über die 16 Energieversorgungsleitungen VL11 - VL42, VL11' - VL42' stehen nun drei Votereinheiten IC1, IC2, IC3 zur Verfügung, d.h. durch die erste und zweite Votereinheit IC1, IC2 werden jeweils 4 der 16 Schaltmittel SM11 - SM42, SM11' - SM42' und durch die dritte Votereinheit IC3 8 der 16 Schaltmittel SM11 - SM42, SM11' - SM42' angesteuert. Um ein unerwünschtes Bremsen des elektromechanischen Bremssystems auch nach Auftreten eines zweiten Fehlers in der Energieverteilung zuverlässig verhindern zu können, wird in Figur 5 dargestellte Schaltungsprinzip vorgesehen, wodurch zusätzliche Schaltpfade bereitgestellt werden. Wird gesteuert durch eine oder mehrere Steuereinheiten C1 - C3 eine der Votereinheiten IC1 - IC3 von der Energieversorgung mittels der weiteren Schaltmittel SMC1, SMC2 getrennt, so sind die zugeordneten Schaltmittel SM11 - SM42, SM11' - SM42' standardmäßig offen, was wiederum zu einem Abschalten der Energieversorgung einzelner Bremsmodule BM1 - BM4 und ein dadurch bedingtes Lösen der jeweiligen Bremsaktuatoreinheit BME1 - BME4 führt.

In einer weiteren besonders vorteilhaften Variante gemäß Figur 4 sind eine erste bis vierte Votereinheit IC1, IC2, IC3, IC4 ("4-Voter-Konzept") zur Steuerung der Schaltmittel SM11 - SM42, SM11' - SM42' vorgesehen. Hierbei ist jeweils einem der vier zur Energieversorgung eines Bremsmoduls BM1 - BM4 vorgesehenen Energieversorgungsleitungen VL11 - VL42, VL11' - VL42' bzw. Schaltmittel SM11 - SM42, SM11' - SM42' eine Votereinheit IC1, IC2, IC3, IC4 zugeordnet, d.h. diese sind unabhängig voneinander schaltbar. Um ein ungewolltes Bremsen eines Bremsmoduls BM1 - BM4 zu unterbinden, ist die Energiezufuhr zumindest einer Bremsaktuatoreinheit BAE1 - BAE4 und/oder eines Steuergerätes SG1 - SG4 des entsprechenden Bremsmoduls BM1 - BM4 zu unterbrechen. Durch die dargestellte Aufteilung der Schaltmittel SM11 - SM42, SM11' - SM42' ist eine "2-Fehler-Toleranz" gewährleistet, d.h. auch bei Ausfall von zwei der vier Votereinheiten IC1 - IC4 ist ein "secondary braking" über die verbleibenden funktionstüchtigen Bremsmodule BM1 - BM4 noch möglich.

Fallen beispielsweise während eines Bremsenvorganges die dritte und vierte Votereinheit IC3, IC4 aus, so werden sämtliche Bremsmodule BM1 - BM4, deren Energieversorgung mittels der dritten und vierten Votereinheit IC3, IC4 gesteuert wird, strom- bzw. spannungslos geschaltet. Im vorliegenden Ausführungsbeispiel wird beispielsweise die Energieversorgung der zweiten Bremsaktuatoreinheit BAE2 ("linkes Vorderrad WFL") und der dritten Bremsaktuatoreinheit BAE3 ("rechtes Hinterrad WFL") unterbrochen, d.h. die zugeordneten Bremsen öffnen stromlos und können kein ungewolltes Bremsen hervorrufen. Zur Realisierung eines "secondary braking" können das verbleibende funktionstüchtige erste und vierte Bremsmodul BM1, BM4 beispielsweise abstufbar betätigt werden. Die erste Bremsaktuatoreinheit BAE1 des ersten Bremsmoduls BM1 wird hierbei über die erste Energieversorgungsleitung VL11 von der Haupt-Energieversorgungseinheit HVE und das erste Steuergerät SG1 über die zusätzliche zweite Energieversorgungsleitung VL12' von der ersten Not-Energieversorgungseinheit NVE1 mit elektrischer Energie versorgt. Ebenso wird die vierte Bremsaktuatoreinheit BAE4 des vierten Bremsmoduls BM4 über die siebte Energieversorgungsleitung VL41 von der Haupt-Energieversorgungseinheit HVE und das vierte Steuergerät SG4 über die zusätzliche achte Energieversorgungsleitung VL42' von der ersten Not-Energieversorgungseinheit NVE1 mit elektrischer Energie versorgt.

Die "2-Fehler-Toleranz" des beschriebenen elektromechanischen Bremssystems ist absolut durchgängig ausgebildet, d.h. fällt beispielsweise die Haupt-Energieversorgungseinheit HVE und eine der Not-Energieversorgungeinheiten NVE1, NVE2 aus, so kann über die verbleibende funktionsfähige Not-Energieversorgung NVE1, NVE2 weiterhin ein "secondary braking" erzielt werden. Auch ist bei Auftreten lediglich eines Fehlers jederzeit ein "secondary braking" gewährleistet. Auch kann eine angepasste Bremskraftverteilung beispielsweise gesteuert über das zentrale Steuersystem ECU für die noch funktionsfähigen Bremsmodule BM1 - BM4 vorgesehen sein, wodurch eine sichere Fahrstabilität gewährleistet ist.

Die Erfindung wurde voranstehend an einem Ausführungsbeispiels beschrieben. Es versteht sich, dass zahlreiche Änderungen sowie Abwandlungen möglich sind, ohne dabei den Schutzumfang, wie durch die Ansprüche 1 bis 11 definiert ist, zu verlassen.

## Patentansprüche

1. Elektromechanisches Bremssystem für Fahrzeuge (F) mit einer ausfallsicheren Energieverteilung bestehend aus einem ersten bis vierten, jeweils einem Rad (WFR, WFL, WRR, WRL) des Fahrzeuges (F) zugeordneten Bremsmodul (BM1 - BM4), das jeweils zumindest ein Steuergerät (SG1 -SG4) und eine Bremsaktuatoreinheit (BAE1 - BAE4) umfasst, wobei zur Versorgung der Bremsmodule (BM1 - BM4) mit elektrischer Energie das Steuergerät (SG1 - SG4) und die Bremsaktuatoreinheit (BAE1 - BAE4) eines Bremsmoduls (BM1 - BM4) jeweils über getrennt voneinander geführte Energieversorgungsleitungen (VL11 - VL42) mit zumindest einer Haupt-Energieversorgungseinheit (HVE) verbunden sind,
**dadurch gekennzeichnet,**
**dass** zur zusätzlichen Versorgung der Bremsmodule (BM1 - BM4) mit elektrischer Energie eine erste Not-Energieversorgungseinheit (NVE1) an das Steuergerät (SG1, SG4) und an die Bremsaktuatoreinheit (BAE1, BAE4) des ersten und vierten Bremsmoduls (BM1, BM4) und eine zweite Not-Energieversorgungseinheit (NVE1) an das Steuergerät (SG2, SG3) und an die Bremsaktuatoreinheit (BAE2, BAE3) des zweiten und dritten Bremsmoduls (BM2, BM3) über jeweils zusätzliche, getrennt voneinander geführte Energieversorgungsleitungen (VL11' - VL42') angeschlossen sind, wobei die Auswahl der zur Energieversorgung der Bremsmodule (BM1 - BM4) vorgesehenen Energieversorgungseinheiten (HVE, NVE1, NVE2) über Schaltmittel (SM11 - SM42, SM11' - SM42') erfolgt, die zumindest teilweise getrennt voneinander über zumindest ein zentrales Steuersystem (ECU) ansteuerbar sind, wobei zum Durchschalten der Energieversorgungsleitungen (VL11 - VL42) erste bis achte Schaltmittel (SM11 - SM42) und zum Durchschalten der zusätzlichen Energieversorgungsleitungen (VL11' - VL42') zusätzliche erste bis achte Schaltmittel (SM11' - SM42') vorgesehen sind, die jeweils getrennt voneinander schaltbar sind, und wobei zur Steuerung der Verteilung der elektrischen Energie an das jeweilige Steuergerät (SG1 - SG4) und die jeweilige Bremsaktuatoreinheit (BAE1 - BAE4) zumindest eine erste und zweite Votereinheit (IC1, IC2) vorgesehen sind.

2. Elektromechanisches Bremssystem nach Anspruch 1,
**dadurch gekennzeichnet,**
**dass** die erste Votereinheit (IC1) zur Steuerung der ersten bis achten Schaltmittel (SM11 - SM42) und die zweite Votereinheit (IC2) zur Steuerung der zusätzlichen ersten bis achten Schaltmittel (SM11' - SM42') vorgesehen sind.

3. Elektromechanisches Bremssystem nach Anspruch 1 oder 2,
**dadurch gekennzeichnet,**
**dass** ein Schaltmittel (SM11 - SM42, SM11' - SM42') durch ein steuerbares Schaltelement oder einer Serienschaltung aus zwei steuerbaren Schaltelementen oder einer Serienschaltung aus einem steuerbaren Schaltelement und einem Diodenelement gebildet sind.

4. Elektromechanisches Bremssystem nach einem der Ansprüche 1 bis 3,
**dadurch gekennzeichnet,**
**dass** die Schaltmittel (SM11 - SM42, SM11' - SM42') im strom- bzw. spannungslosen Zustand einen vorgegebenen Schaltzustand aufweisen, der abhängig von der jeweils vorliegenden Schaltstruktur, insbesondere der Anzahl der vorgesehen Votereinheiten (IC1 - IC4) unterschiedlich gewählt ist.

5. Elektromechanisches Bremssystem nach einem der Ansprüche 1 bis 4,
**dadurch gekennzeichnet,**
**dass** das erste Bremsmodul (BM1) dem rechten Vorderrad (WFR), das zweite Bremsmodul (BM2) dem linken Vorderrad (WFL), das dritte Bremsmodul (BM3) dem rechten Hinterrad (WRR) und das vierte Bremsmodul (BM4) dem linken Hinterrad (WRL) zugeordnet ist.

6. Elektromechanisches Bremssystem nach einem der Ansprüche 1 bis 5,
**dadurch gekennzeichnet,**
**dass** die Zuordnung der Energieversorgungseinheiten (HVE, NVE1, NVE2) zu den Bremsmodulen (BM1, BM4) derart gewählt ist, dass eine diagonale, seitenweise, achsweise oder radweise Bremskreisaufteilung entsteht.

7. Elektromechanisches Bremssystem nach einem der Ansprüche 1 bis 6,
**dadurch gekennzeichnet,**
**dass** die Energieversorgung der ersten oder zweiten Votereinheit (IC1, IC2) über weitere Schaltmittel (SMC1, SMC2) abschaltbar ist, wobei die Schaltmittel (SMC1, SMC2) über zumindest eine im zentralen Steuersystem (ECU) vorgesehen Steuereinheit (C1, C2, C3) steuerbar sind.

8. Elektromechanisches Bremssystem nach Anspruch 7,
**dadurch gekennzeichnet,**
**dass** die zumindest eine Steuereinheit (C1, C2, C3) zur Auswertung der an den Bremsaktuatoreinheiten (BAE1 - BAE4) anliegenden Spannungen und/oder Ströme eingerichtet ist, wobei abhängig vom Auswerteergebnis die Energieversorgung der ersten oder zweiten Votereinheit (IC1, IC2) über die weiteren Schaltmittel (SMC1, SMC2) abgeschaltet wird.

9. Verfahren zur ausfallsicheren Energieverteilung in einem elektromechanischen Bremssystem für Fahrzeuge (F) bestehend aus einem ersten bis vierten, jeweils einem Rad (WFR, WFL, WRR, WRL) des Fahrzeuges (F) zugeordneten Bremsmodul (BM1 - BM4), das jeweils zumindest ein Steuergerät (SG1 - SG4) und eine Bremsaktuatoreinheit (BAE1 - BAE4) umfasst, bei dem das Steuergerät (SG1 - SG4) und die Bremsaktuatoreinheit (BAE1 - BAE4) eines Bremsmoduls (BM1 - BM4) gesteuert über zumindest ein zentrales Steuersystem (ECU) jeweils getrennt voneinander mit elektrischer Energie versorgt werden, wobei über das zumindest eine zentrale Steuersystem (ECU) das Auftreten eines ersten und eines zweiten Systemfehlers erfasst wird und dass die Energieverteilung im elektromechanischen Bremssystem derart über das zumindest eine zentrale Steuersystem (ECU) gesteuert wird, dass zumindest zwei Bremsmodule (BM1 - BM4) nach Auftreten eines ersten und eines zweiten Systemfehlers weiterhin zum Bremsen der Fahrzeuges (F) verfügbar sind und zumindest eines der verbleibenden, durch den ersten und/oder zweiten Systemfehler betroffenen Bremsmodule (BM1 - BM4) abgeschaltet wird,
**dadurch gekennzeichnet,**
**dass** die elektrische Energie von zumindest einer Haupt-Energieversorgungseinheit (HVE) an die Bremsmodule (BM1 - BM4) jeweils über getrennt voneinander geführte Energieversorgungsleitungen (VL11 - VL42) zugeführt wird und das zusätzlich elektrische Energie an das Steuergerät (SG1, SG4) und an die Bremsaktuatoreinheit (BAE1, BAE4) des ersten und vierten Bremsmoduls (BM1, BM4) über eine erste Not-Energieversorgungseinheit (NVE1) und an das Steuergerät (SG2, SG3) und an die Bremsaktuatoreinheit (BAE2, BAE3) des zweiten und dritten Bremsmoduls (BM2, BM3) über eine zweite Not-Energieversorgungseinheit (NVE1), und zwar über jeweils zusätzliche, getrennt voneinander geführte Energieversorgungsleitungen (VL11' - VL42') zugeführt wird, wobei die Energieversorgungsleitungen (VL11 - VL42) über erste bis achte Schaltmittel (SM11 - SM42) und die zusätzlichen Energieversorgungsleitungen (VL11' - VL42') über zusätzliche erste bis achte Schaltmittel (SM11' - SM42') getrennt voneinander durchgeschaltet werden, und wobei zur Steuerung der Verteilung der elektrischen Energie an das jeweilige Steuergerät (SG1 - SG4) und die jeweilige Bremsaktuatoreinheit (BAE1 - BAE4) zumindest eine erste und zweite Votereinheit (IC1, IC2) vorgesehen sind.

10. Verfahren nach Anspruch 9,
**dadurch gekennzeichnet,**
**dass** die elektrische Energie auf die Räder (WFR, WFL, WRR, WRL) des Fahrzeuges (F) seitenweise, achsweise oder radweise verteilt wird.

11. Verfahren nach Anspruch 9 oder 10,
**dadurch gekennzeichnet,**
**dass** die Schaltmittel (SM11 - SM42, SM11' - SM42') im strom- bzw. spannungslosen Zustand in einen vorgegebenen Schaltzustand gesteuert werden, der abhängig von der jeweils vorliegenden Schaltstruktur unterschiedlich gewählt wird.

## Claims

1. Electromechanical brake system for vehicles (F) with a failsafe energy distribution composed of a first to a fourth brake module (BM1-BM4), each assigned to a wheel (WFR, WFL, WRR, WRL) of the vehicle (F) and each comprising at least one control device (SG1-SG4) and one brake actuator unit (BAE1-BAE4), wherein in order to supply the brake modules (BM1-BM4) with electrical energy the control device (SG1-SG4) and the brake actuator unit (BAE1-BAE4) of a brake module (BM1-BM4) are each connected via energy supply lines (VL11-VL42) routed separately from one another, to at least one main energy supply unit (HVE),
**characterized**
**in that** in order to additionally supply the brake modules (BM1-BM4) with electrical energy a first emergency energy supply unit (NVE1) is connected to the control device (SG1, SG4) and to the brake actuator unit (BAE1, BAE4) of the first and fourth brake modules (BM1, BM4), and a second emergency energy supply unit (NVE1) is connected to the control device (SG2, SG3) and to the brake actuator unit (BAE2, BAE3) of the second and third brake modules (BM2, BM3) via, in each case, additional energy supply lines (VL11'-VL42') which are routed separately from one another, wherein the selection of the energy supply units (HVE, NVE1, NVE2), provided to supply energy to the brake modules (BM1-BM4), is carried out by means of switching means (SM11-SM42, SM11'-SM42') which can be actuated at least partially separately from one another by means of at least one central control system (ECU), wherein in order to connect through the energy supply lines (VL11-VL42) first to eighth switching means (SM11-SM42) are provided, and in order to connect through the additional energy supply lines (VL11'-VL42'), additional first to eighth switching means (SM11'-SM42') are provided, which switching means (SM11-SM42, SM11'-SM42') can each be switched separately from one another, and wherein in order to control the distribution of the electrical energy to the respective control device (SG1-SG4) and the respective brake actuator unit (BAE1-BAE4) at least a first and a second voter unit (IC1, IC2) are provided.

2. Electromechanical brake system according to Claim 1,
**characterized**
**in that** the first voter unit (IC1) is provided for controlling the first to eighth switching means (SM11-SM42), and the second voter unit (IC2) is provided for controlling the additional first to eighth switching means (SM11'-SM42').

3. Electromechanical brake system according to Claim 1 or 2,
**characterized**
**in that** a switching means (SM11-SM42, SM11'-SM42') is formed by a controllable switching element or a series circuit composed of two controllable switching elements or a series circuit composed of a controllable switching element and a diode element.

4. Electromechanical brake system according to one of Claims 1 to 3,
**characterized**
**in that** the switching means (SM11-SM42, SM11'-SM42') have, in the currentless or voltageless state, a predefined switched state which is selected differently as a function of the respectively present switching structure, in particular the number of voter units (IC1-IC4) provided.

5. Electromechanical brake system according to one of Claims 1 to 4,
**characterized**
**in that** the first brake module (BM1) is assigned to the right-hand front wheel (WFR), the second brake module (BM2) is assigned to the left-hand front wheel (WFL), the third brake module (BM3) is assigned to the right-hand rear wheel (WRR), and the fourth brake module (BM4) is assigned to the left-hand rear wheel (WRL).

6. Electromechanical brake system according to one of Claims 1 to 5,
**characterized**
**in that** the assignment of the energy supply units (HVE, NVE1, NVE2) to the brake modules (BM1, BM4) is selected in such a way that a brake circuit division which is diagonal, on a side-basis, axle-basis or wheel-basis is produced.

7. Electromechanical brake system according to one of Claims 1 to 6,
**characterized**
**in that** the energy supply of the first or second voter unit (IC1, IC2) can be switched off by means of further switching means (SMC1, SMC2), wherein the switching means (SMC1, SMC2) can be controlled by means of at least one control unit (C1, C2, C3) provided in the central control system (ECU).

8. Electromechanical brake system according to Claim 7,
**characterized**
**in that** the at least one control unit (C1, C2, C3) is configured to evaluate the voltages and/or currents present at the brake actuator units (BAE1-BAE4), wherein the energy supply of the first or second voter unit (IC1, IC2) is switched off by means of the further switching means (SMC1, SMC2) as a function of the evaluation result.

9. Method for providing a failsafe energy distribution in an electromechanical brake system for vehicles (F) composed of a first to a fourth brake module (BM1-BM4), each assigned to a wheel (WFR, WFL, WRR, WRL) of the vehicle (F) and each comprising at least one control device (SG1-SG4) and one brake actuator unit (BAE1-BAE4), in which method the control device (SG1-SG4) and the brake actuator unit (BAE1-BAE4) of a brake module (BM1-BM4) are each supplied separately from one another with electrical energy under the control of at least one central control system (ECU), wherein the occurrence of a first and a second system fault is detected by means of the at least one central control system (ECU), and in that the energy distribution in the electromechanical brake system is controlled by means of the at least one central control system (ECU) in such a way that at least two brake modules (BM1-BM4) continue to be available for braking the vehicle (F) after the occurrence of a first and a second system fault, and at least one of the remaining brake modules (BM1-BM4) which is affected by the first and/or second system fault is switched off,
**characterized**
**in that** the electrical energy is fed to the brake modules (BM1-BM4) from at least one main energy supply unit (HVE) in each case via energy supply lines (VL11-VL42) which are routed separately from one another, and the additional electrical energy is fed to the control device (SG1, SG4) and to the brake actuator unit (BAE1, BAE4) of the first and fourth brake modules (BM1, BM4) by means of a first emergency energy supply unit (NVE1) and to the brake control device (SG2, SG3) and to the brake actuator unit (BAE2, BAE3) of the second and third brake modules (BM2, BM3) by means of a second emergency energy supply unit (NVE1), specifically via in each case additional energy supply lines (VL11'-VL42') which are routed separately from one another, wherein the energy supply lines (VL11-VL42) are connected through separately from one another by means of first to eighth switching means (SM11-SM42), and the additional energy supply lines (VL11'-VL42') are switched through separately from one another by means of additional first to eighth switching means (SM11'-SM42'), and wherein in order to control the distribution of the electrical energy to the respective control device (SG1-SG4) and the respective brake actuator unit (BAE1-BAE4) at least a first and a second voter unit (IC1, IC2) are provided.

10. Method according to Claim 9,
**characterized**
**in that** the electrical energy is distributed to the wheels (WFR, WFL, WRR, WRL) of the vehicle (F) on a side-basis, axle-basis or wheel-basis.

11. Method according to Claim 9 or 10,
**characterized**
**in that** in the currentless or voltageless state the switching means (SM11-SM42, SM11'-SM42') are placed in a preswitched state which is selected differently as a function of the respectively present switching structure.

## Revendications

1. Système électromécanique de freinage pour véhicules (F) présentant une répartition sécurisée d'énergie, constitué d'un premier à quatrième module de freinage (BM1 - BM4), chacun associé à une roue (WFR, WFL, WRR, WRL) du véhicule (F) et présentant chacun au moins un appareil de commande (SG1 - SG4) et une unité (BAE1 - BAE4) d'actionneur de frein,
l'appareil de commande (SG1 - SG4) et l'unité (BAE1 - BAE4) d'actionneur de frein d'un module de frein (BM1 - BM4) principal étant raccordés chacun par des conducteurs (HVE) d'alimentation en énergie par des conducteurs (VL11 - VL42) d'alimentation en énergie séparés les uns des autres pour alimenter les modules de freins (BM1 - BM4) en énergie électrique, **caractérisé en ce que**
pour une alimentation supplémentaire des modules de freins (BM1 - BM4), une première unité (NVE1) d'alimentation en énergie de secours est raccordée à l'appareil de commande (SG1, SG4) et à l'unité (BAE1, BAE4) d'actionneur de frein du premier et du quatrième module de frein (BM1, BM4) et une deuxième unité (NVE1) d'alimentation en énergie de secours est raccordée à l'appareil de commande (SG2, SG3) et à l'unité (BAE2, BAE3) d'actionneur (BM2, BM3) par des conducteurs supplémentaires (VL11' - VL42') d'alimentation en énergie séparés les uns des autres, la sélection des unités (HVE, NVE1, NVE2) d'alimentation en énergie prévues pour l'alimentation en énergie des modules de freins (BM1 - BM4) s'effectuant par l'intermédiaire de moyens de commutation (SM11 - SM42, SM11' - SM42') qui peuvent être commandés de manière au moins partiellement séparée les uns des autres par au moins un système central de commande (ECU), des premiers à huitièmes moyens de commutation (SM11 - SM42) étant prévus pour le branchement des conducteurs (VL11 - VL42) d'alimentation en énergie et des moyens supplémentaires de commutation (SM11' - SM42') étant prévus pour le branchement des conducteurs supplémentaires (VL11' - VL42') d'alimentation en énergie et pouvant être commutés tous séparément les uns des autres, au moins une première et une deuxième unité de votation (IC1, IC2) étant prévues pour la commande de la répartition de l'énergie électrique à l'appareil de commande (SG1 - SG4) concerné et à l'unité (BAE1 - BAE4) d'actionneur de frein concerné.

2. Système électromécanique de freinage selon la revendication 1, **caractérisé en ce que** la première unité de votation (IC1) est prévue pour commander les premiers à huitièmes moyens de commutation (SM11 - SM42) et la deuxième unité de votation (IC2) pour la commande des premiers à huitièmes moyens supplémentaires de commutation (SM11' - SM42').

3. Système électromécanique de freinage selon les revendications 1 ou 2, **caractérisé en ce qu'**un moyen de commutation (SM11 - SM42, SM11' - SM42') est formé par un élément de commutation asservi ou un circuit série constitué de deux éléments de commutation asservis ou d'un circuit série constitué d'un élément de commutation asservi et d'un élément de diode.

4. Système électromécanique de freinage selon l'une des revendications 1 à 3, **caractérisé en ce qu'**en l'absence de courant ou de tension, les moyens de commutation (SM11 - SM42, SM11' - SM42') présentent un état de commutation prédéterminé qui est sélectionné différemment selon la structure de commutation particulière, et en particulier **en ce que** le nombre des unités de votation (IC1 - IC4) prévues est sélectionné différemment.

5. Système électromécanique de freinage selon l'une des revendications 1 à 4, **caractérisé en ce que** le premier module de freinage (BM1) est associé à la roue avant droite (WFR), le deuxième module de freinage (BM2) à la roue avant gauche (WFL), le troisième module de freinage (BM3) à la roue arrière droite (WRR) et le quatrième module de freinage (BM4) à la roue arrière gauche (WRL).

6. Système électromécanique de freinage selon l'une des revendications 1 à 5, **caractérisé en ce que** l'association des unités (HVE, NVE1, NVE2) d'alimentation en énergie aux modules de freinage (BM1, BM4) est sélectionnée de manière à obtenir une division diagonale, latérale, axiale ou roue par roue du circuit de freinage.

7. Système électromécanique de freinage selon l'une des revendications 1 à 6, **caractérisé en ce que** l'alimentation en énergie de la première ou de la deuxième unité de votation (IC1, IC2) peut être débranchée par d'autres moyens de commutation (SMC1, SMC2), les moyens de commutation (SMC1, SCM2) pouvant être commandés par au moins une unité de commande (C1, C2, C3) prévue dans le système central de commande (ECU).

8. Système électromécanique de freinage selon la revendication 7, **caractérisé en ce que** la ou les unités de commande (C1, C2, C3) sont conçues pour évaluer les tensions et/ou courants appliqués sur les unités (BAE1 - BAE4) d'actionneur de frein, l'alimentation en énergie de la première ou de la deuxième unité de votation (IC1, IC2) étant débranchée par les autres moyens de commutation (SMC1, SMC2) selon le résultat de l'évaluation.

9. Procédé de répartition sécurisée de l'énergie dans un système de freinage électromécanique pour véhicules (F), constitué d'un premier à quatrième module de freinage (BM1 - BM4), chacun associé à une roue (WFR, WFL, WRR, WRL) du véhicule (F) et présentant chacun au moins un appareil de commande (SG1 - SG4) et une unité (BAE1 - BAE4) d'actionneur de frein,
l'appareil de commande (SG1 - SG4) et l'unité (BAE1 - BAE4) d'actionneur de frein d'un module de frein (BM1 - BM4) principal étant alimentés séparément les uns des autres en énergie électrique sous la commande d'au moins un système central de commande (ECU), l'apparition d'un premier et d'un deuxième défaut du système étant détectée par le ou les systèmes centraux de commande (ECU) et la répartition d'énergie dans le système électromécanqiue de freinage étant commandée par le ou les systèmes centraux de commande (ECU) de telle sorte qu'après l'apparition d'un premier et d'un deuxième défaut du système, au moins deux modules de freinage (BM1 - BM4) soient disponibles pour freiner le véhicule (F) et qu'au moins un des modules de freinage (BM1 - BM4) restants, concernés par le premier et/ou le deuxième défaut du système, soit débranché,
**caractérisé en ce que**
l'énergie électrique est apportée par au moins une unité principale (HVE) d'alimentation en énergie aux modules de freinage (BM1 - BM4) par des conducteurs (VL11 - VL42) d'alimentation en énergie séparés les uns des autres et **en ce que** de l'énergie électrique supplémentaire est apportée à l'appareil de commande (SG1, SG4) et à l'unité (BAE1, BAE4) d'actionneur de frein du premier et du quatrième module de frein (BM1, BM4) par une première unité (NVE1) d'alimentation en énergie de secours et à l'appareil de commande (SG2, SG3) et à l'unité (BAE2, BAE3) d'actionneur (BM2, BM3) par une deuxième unité (NVE1) d'alimentation en énergie de secours, chaque fois par des conducteurs supplémentaires (VL11' - VL42') d'alimentation en énergie séparés les uns des autres, les conducteurs (VL11 - VL42) d'alimentation en énergie étant branchés séparément les uns des autres par des premiers à huitièmes moyens de commutation (SM11 - SM42) et les conducteurs supplémentaires (VL11' - VL42') d'alimentation en énergie étant branchés séparément les uns des autres par des moyens supplémentaires de commutation (SM11' - SM42'), au moins une première et une deuxième unité de votation (IC1, IC2) étant prévues pour la commande de la répartition de l'énergie électrique amenée à chaque appareil de commande (SG1 - SG4) et à chaque unité (BAE1 - BAE4) d'actionneur de frein.

10. Procédé selon la revendication 9, **caractérisé en ce que** l'énergie électrique est répartie entre les roues (WFR, WFL, WRR, WRL) du véhicule (F) latéralement, axialement ou roue par roue.

11. Procédé selon les revendications 9 ou 10, **caractérisé en ce que** les moyens de commutation (SM11 - SM42, SM11' - SM42') sont commandés en l'absence de courant ou de tension dans un état de commutation prédéterminé qui est sélectionné différemment selon la structure de commutation particulière prévue.
